Europäisches Patentamt

(19) European Patent Office

Office européen des brevets

(11) Publication number: **0 149 521**
**A2**

# (12) EUROPEAN PATENT APPLICATION

(21) Application number: **85300116.2**

(22) Date of filing: **08.01.85**

(51) Int. Cl.⁴: **G 01 F 1/00**
**//G01F23/02**

(30) Priority: **12.01.84 GB 8400739**

(43) Date of publication of application:
**24.07.85 Bulletin 85/30**

(84) Designated Contracting States:
**AT BE CH DE FR GB IT LI NL SE**

(71) Applicant: WATER RESEARCH CENTRE
P.O. Box 16 Henley Road Medmenham
Marlow Buckinghamshire SL7 2HD(GB)

(72) Inventor: Hoyland, Garry
134 Parkway
Welwyn Garden City Hertfordshire(GB)

(74) Representative: Wain, Christopher Paul et al,
A.A. THORNTON & CO. Northumberland House 303-306
High Holborn
London WC1V 7LE(GB)

(54) Flowmeter.

(57) A liquid flowmeter comprises a chamber (11) into which the liquid is flowed from a supply (16), and the time taken for a predetermined volume of liquid to enter the chamber (11) is determined. From this, the flowrate is calculated. Preferably, a pressure transducer (30) mounted in the chamber provides signals to a control (32), the transducer signals being indicative of the liquid level within the chamber.

EP 0 149 521 A2

./...

*Fig. I.*

- 1 -

FLOWMETER

This invention relates to a method and apparatus for measuring the rate of flow of a liquid.

It is important for various purposes to be able accurately to measure flow rates of liquids. We have now devised a fill and draw flowmeter which is particularly (but not exclusively) suited for application in processes where flowrates have to be measured accurately over a very wide range. An example of such a process is filter pressing of slurries into cakes, where the flowmeter could be used to measure the flowrate of the filtrate for process control purposes.

According to the present invention, a liquid flowmeter comprises a chamber for receiving the flowing liquid, and means for determining the time taken for a predetermined volume of said flowing liquid to flow into said chamber. Preferably, the flowmeter comprises means for determining the time taken for the liquid to rise from a first to a second level in the chamber. Since the time taken for a volume of liquid to flow into the chamber is inversely proportional to the liquid flow rate into the chamber, a measure of the flow rate is thus obtainable. An absolute value of the flow rate can be obtained by calibrating the flowmeter using known liquid flow rates.

Whilst the shape of the chamber is not critical, it is preferably in the form of a vertical or upright tube.

The time measurement can begin at the instant the liquid enters the (empty) chamber.  More preferably, however, the first level will be above the bottom of the chamber. The second level will be above the first, by a distance chosen having regard to the flow rate and the volume of the chamber between the two levels.  In general, the greater the flow rate to be measured, the larger will be the chamber volume needed between the two levels.

In order to measure the time taken for the liquid to rise in the chamber from the first to the second levels, it is necessary to sense the level of the liquid in the chamber.  When the first level is the bottom of the container, it will be necessary to sense when the liquid reaches the second level.  When the first level is above the bottom of the chamber, it will be necessary to sense when the liquid reaches both the first and the second levels.  For these purposes, individual sensors can be provided in or adjacent the chamber at the levels required.  Alternatively, a pressure transducer can be provided near the bottom of the vessel so that the liquid level can be continuously monitored as it rises above the transducer.  The two levels can then be defined in terms of signal values from the transducer, and an electronic circuit used to measure the time span automatically.  Such an arrangement is preferred in accordance with the invention.

The chamber preferably has a quick-acting valve in or downstream of the liquid outlet, the valve being closed during flow rate measurement and subsequently opened to bring the liquid in the chamber down below the first level ready for the next measurement.  Control of the valve can be effected automatically, for example by the electronic circuit.

The chamber may be arranged in series in the liquid flowpath (in which case the flow of liquid downstream of the flowmeter will be interrupted during flow measurement), or in parallel. Measurements may be made continuously, or intermittently. In the case of continuous measurements, by controlling the outlet valve the liquid level will rise and fall in the chamber between the two present levels. In intermittent measurement, the outlet valve will normally be open and the chamber will only fill when a measurement is being made.

In order that the invention may be more fully understood, reference is made to the accompanying drawings, wherein:

FIGURE 1 shows partly schematically and partly in vertical section one embodiment of flowmeter of the invention for measuring flow rates from almost zero up to about $50m^3/h$.;

FIGURES 2 to 5 show schematically four other embodiments of flowmeter of the invention.

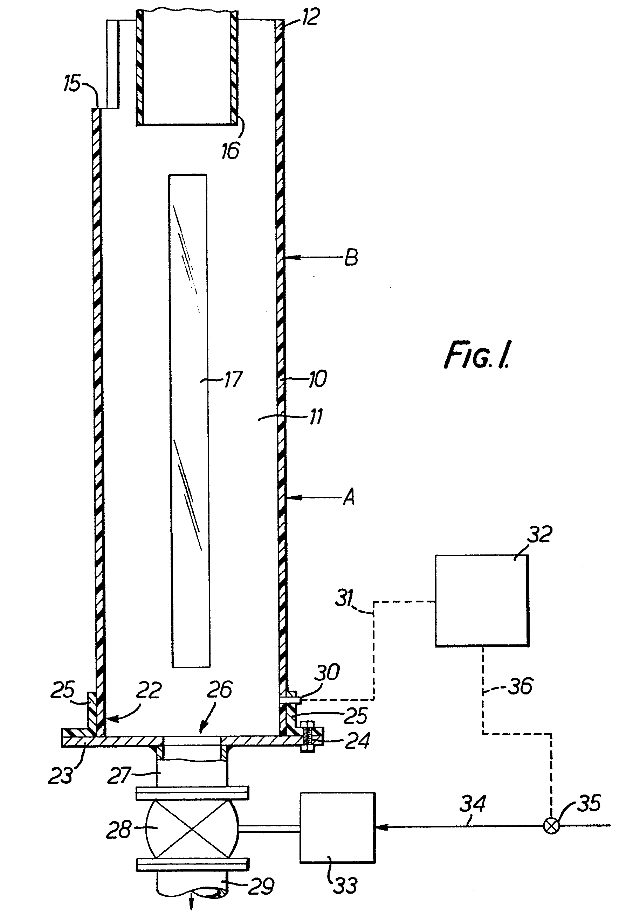

Referring to Figure 1, there is shown in vertical section a tube 10 which is suitably of plastics material, the interior of which constitutes the chamber 11 of the flowmeter. The top 12 of tube 10 is open.

A part of the wall of the tube 10, near the top 12, is cut away to provide an overflow weir 15 for liquid filling the chamber 11. A feed pipe 16 is positioned in the open top 12 of tube 10, to deliver the liquid (whose flowrate is to be measured) into chamber 11. The wall of tube 10 may be fitted with a window 17 or a site glass so that the level of the liquid inside the tube can be viewed from outside.

At the bottom end 22 of pipe 10 is a steel blanking plate 23 fixed by bolts 24 (one only shown) to a collar 25 attached to the end 22 of the pipe. The blanking plate 23 has a central bore 26 to which is welded an outlet pipe 27. The outlet pipe is connected to a butterfly valve 28 (shown schematically only), the downstream side of which is connected to a further pipe 29.

In the wall of pipe 10, near the bottom 22 thereof, is mounted a pressure transducer 30 (shown schematically). This is connected electrically (discontinuous line 31) to an electrical/electronic control unit 32. The transducer 30 is exposed to the pressure exerted by liquid in the chamber and provides an electrical signal dependent on the valve of the said pressure.

The butterfly valve 28 is operated by an actuator 33 which, in the embodiment illustrated, is itself actuated by compressed air. A compressed air supply line 34 is provided thereto, the line including a solenoid-operated control valve 35. The valve 35 is electrically connected (line 36) to the control 32.

In operation, the flowmeter is used as follows. The liquid whose flow is to be measured is passed through feed pipe 16 into chamber 11 of the flowmeter. Valve 28 is normally open, and the liquid flows out of chamber 11 and away through pipe 29. However, upon closure of valve 28 in response to a signal from control 32 to open valve 35 to supply air to actuator 33, the chamber 11 begins to fill with the incoming liquid. As the level of liquid rises above the pressure transducer 30, the transducer provides an electrical signal (indicative of the pressure thereon) to the control 32, the signal changing as the pressure on the transducer increases with the rising liquid level. When the pressure reaches a predetermined level corresponding to the liquid reaching a first level "A" in chamber 11, a timer is started in control 32. The timer runs until the signal from transducer 30 indicates that the liquid has reached the second level "B" in chamber 11. The time taken for the liquid to rise from "A" to "B" is inversely proportional to the liquid flowrate. If absolute values of flowrate are required, the flowmeter must first be calibrated using known liquid flowrates.

The levels "A" and "B" are notional: it is the signal value from the transducer which is set first to start and then to stop the timer. However, it is convenient to consider the matter in terms of levels "A" and "B". The difference in level between "A" and "B" will be chosen having regard to the particular flowrate to be measured. For small flowrates, levels "A" and "B" will usually be closer than for larger flowrates. Thus, the flowmeter can be used for measuring a wide variety of flow rates.

After the liquid has reached level "B", control 32 causes valve 28 to open to allow the liquid in chamber 11 to drain therefrom. If valve 28 is not opened, or not opened soon enough, liquid will overflow from chamber 11 via weir 15.

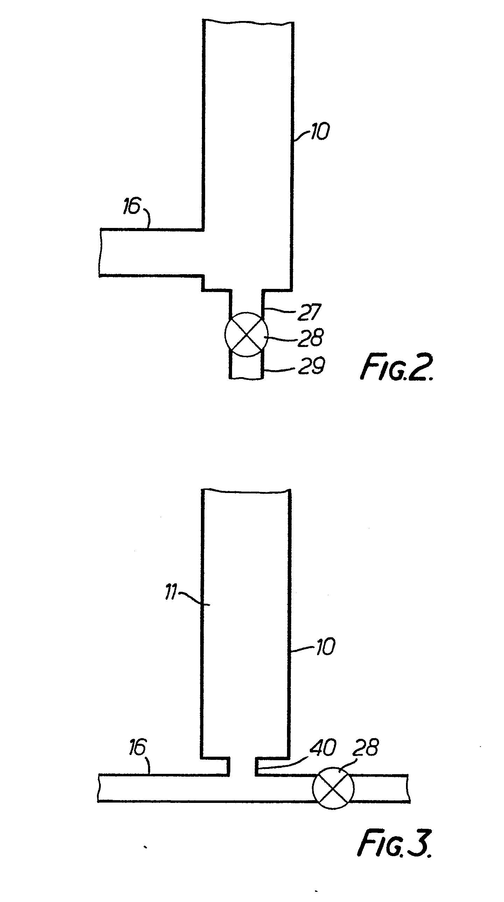

Figure 2 shows schematically another possible arrangement of tube 10 and inlet 16. Instead of inlet tube 16 being arranged to feed into the open top of tube 10, here it is arranged as a lateral feed into the tube 10, near the bottom thereof. In this arrangement, the transducer (not shown) will normally be mounted in tube 10 above the level of inlet 16.

Figure 3 shows schematically another possible arrangement. Here, tube 10 is mounted above the fluid flow feed 16, and valve 28 is located in the feed 16 itself. Tube 10 is in open communication with feed 16 via neck 40. Upon closure of valve 28, liquid flows up through neck 40 and rises up chamber 11. After it has reached the second level therein, valve 28 may be re-opened and chamber 11 allowed to drain.

- 6 -

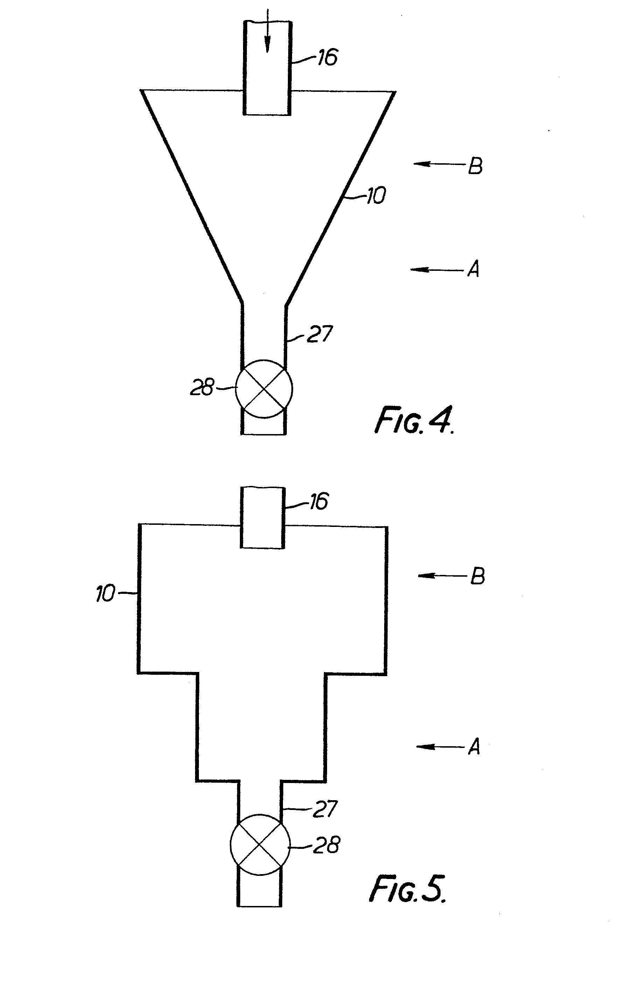

The sensitivity and measurement frequency of a flowmeter of the invention can be increased for the measurement of low flowrates by using a tube 10 having a diameter which increases with the distance from the bottom of the tube. Thus, Figure 4 shows a tapered conical tube 10 and Figure 5 shows a stepped tube 10. Both meters also include a butterfly valve 28 in the outlet 27, and inlet pipe 16. Levels A and B are also shown.

CLAIMS:

1.      A liquid flowmeter, which comprises a chamber for receiving the flowing liquid, and means for determining the time taken for a predetermined volume of said flowing liquid to flow into said chamber.

2.      A flowmeter according to claim 1, which comprises means for determining the time taken for the liquid to rise from a first to a second level in the chamber.

3.      A flowmeter according to claim 1 or 2 wherein said chamber is in the form of an upright tube.

4.      A flowmeter according to claim 3, the tube includes a sensor at each of said first and second levels to sense the presence of liquid thereat.

5.      A flowmeter according to claim 2 or 3, which includes a pressure sensitive transducer so positioned in said chamber as to be submerged in said liquid in use of the flowmeter.

6.      A flowmeter according to claim 5, wherein said first and second liquid levels are defined in terms of signal values from said transducer, and said flowmeter further comprises an electronic circuit to receive said signals and measure the time span therebetween.

7.      A flowmeter according to any of claims 2 to 6, which also comprises a liquid outlet valve, and wherein means are provided automatically to open said valve when the liquid reaches or rises above the second level in the chamber.

8.      A flowmeter according to any of claims 2 to 7, wherein the cross-sectional area, in a horizontal plane, of the chamber at the second level is greater than at the first level.

9.      A method of measuring the rate of flow of a liquid which comprises causing said liquid to flow into, and be received by, a chamber and determining the time taken for a predetermined volume of said liquid to flow into said chamber.

Fig. I.

0149521

Fig.2.

Fig.3.

3/3

0149521

16

B

10

A

27

28

Fig.4.

16

10

B

A

27

28

Fig.5.